# EUROPEAN PATENT APPLICATION

(11) **EP 2 503 143 A2**
(43) Date of publication of application: **26.09.2012**
(21) Application number: 12159934.4
(22) Date of filing: 16.03.2012
(51) Int. Cl.: F03D 1/06

(54) **System and method for increasing energy capture by wind turbines**

(30) Priority: 22.03.2011 US 201113053368
(71) Applicant: General Electric Company, Schenectady, NY 12345 (US)
(72) Inventor: Loganathan, Jaikumar, Niskayuna, NY New York 12309 (US); Dey, Subhrjit, Niskayuna, NY New York 12309 (US); Gupta, Anurag, Niskayuna, NY New York 12309 (US)
(74) Representative: Bedford, Grant Richard

(57) **Abstract**

A blade 204 is presented. The blade 204 includes a proximal end 220 and a distal end 214, and a pronounced camber 302 running between the proximal end to the distal end, wherein the pronounced camber 302 is located in proximity to a trailing edge and on a suction side of the blade, and an amplitude of the pronounced camber 302 at a location varies between about 0.7% to about 1.4% of a chord's length of a cross-section of the blade 204 at said location.

## Description

This invention relates generally to the field of wind turbines, and more specifically to wind turbine blades including pronounced camber.

Wind turbines are increasingly gaining importance in the area of renewable sources of energy generation. In recent times, wind turbine technology has been applied to large-scale power generation applications, besides the conventional power generation methods. Thus, maximizing the performance while minimizing loads of the wind turbines in varied wind conditions is of utmost importance. Typically, the performance of wind turbines reduces due to variations in the operating conditions of the wind turbines. The operating conditions typically include environmental conditions, such as, direction of wind, velocity of wind, an angle of attack, and the like. For example, a variation in the direction of wind may change the angle of attack of a blade that may alter the performance of the blade. However, such environmental conditions are beyond the control of human beings. Therefore, efforts have been made to detect the operating conditions and accordingly control the wind turbines to increase performance of the wind turbines in adverse conditions. To increase the performance of wind turbines, efforts have also been made to design optimized airfoils that can withstand variations in the operating conditions.

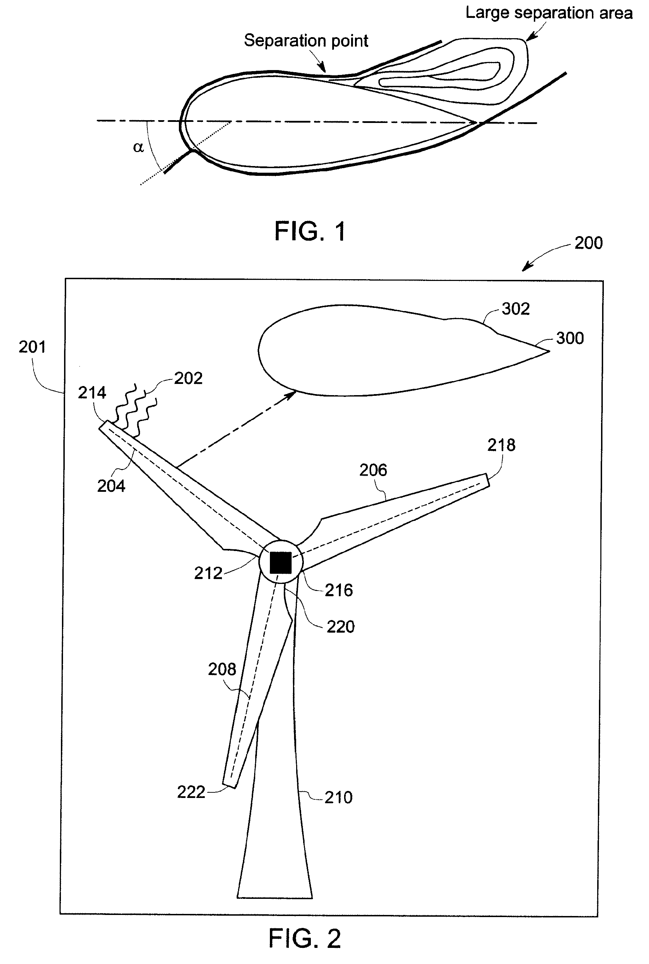

The optimized airfoils may be designed based upon various relationships between the operating conditions of wind turbines and few parameters. The parameters, for example, include an operational angle of attack and airfoil properties viz., a lift coefficient, a drag coefficient, a stall angle, and the like. For instance, FIG. 1 shows an exemplary generic airfoil having a suction side. As shown in FIG. 1, the flow of wind prematurely separates at a separation point from the suction side of the airfoil. The early separation of wind forms a large separation area, and increases drag force acting on the airfoil due to an increase in drag coefficient. Consequently, the performance of a wind turbine having blades with such airfoils may reduce.

In view of the foregoing, it would be beneficial and advantageous to provide a system that includes blades that have optimized design or profile. Particularly, it will be beneficial to provide airfoil that has an optimized design or profile to increase the performance of systems over a wider operating margin.

Briefly in accordance with one aspect of the present invention, a blade is presented. The blade includes a proximal end and a distal end, and a pronounced camber running between the proximal end to the distal end, wherein the pronounced camber is located in proximity to a trailing edge and on a suction side of the blade, and an amplitude of the pronounced camber at a location varies between about 0.7% to about 1.4% of a chord's length of a cross-section of the blade at said location.

In accordance with another aspect, a system is presented. The system includes a plurality of blades, wherein each of the plurality of blades including a plurality of airfoils, each of the plurality of airfoils comprising a pronounced camber, wherein the pronounced camber is located on a suction side and in proximity to a trailing edge of each of the plurality of airfoils, and the pronounced camber includes an amplitude varying from about 0.7% to about 1.4% of a length of a chord of each of the plurality of airfoils.

In accordance with one more aspect of the present technique, a wind turbine is presented. The wind turbine includes a plurality of blades, wherein each of the plurality of blades includes a plurality of airfoils, each of the plurality of airfoils comprising a pronounced camber, wherein the pronounced camber is located on a suction side and in proximity to a trailing edge of each of the plurality of airfoils, and the pronounced camber includes an amplitude varying from about 0.7% to about 1.4% of a length of a chord of each of the plurality of airfoils.

In accordance with one more aspect of the invention, a horizontal-axis wind turbine is presented. The horizontal-axis wind turbine includes a plurality of blades, wherein each of the plurality of blades include a plurality of airfoils, each of the plurality of airfoils comprising a portion of a pronounced camber, wherein the pronounced camber is located on a suction side and in proximity to a trailing edge of each of the plurality of airfoils, and the pronounced camber includes an amplitude varying from about 0.7% to about 1.4% of a length of a chord of each of the plurality of airfoils.

In accordance with still another aspect of the present technique, a method of assembling a rotor blade is presented. The method includes steps of forming multiple modules of the rotor blade wherein one or more of the modules, or portions thereof, include a pronounced camber, and successively coupling the modules to form the rotor blade, wherein the pronounced camber is located in proximity to a trailing edge and on a suction side of the rotor blade, and an amplitude of the pronounced camber at a location varies between about 0.7% to about 1.4% of a chord's length of a cross-section of the blade at said location.

Various features, aspects, and advantages of the present invention will become better understood when the following detailed description is read with reference to the accompanying drawings in which like characters represent like parts throughout the drawings, wherein:
FIG. 1 illustrates a generic airfoil that shows early separation of wind flow due to the profile of the airfoil;
FIG. 2 is a diagrammatic illustration of an exemplary wind turbine system that includes multiple blades, each of the blades including a pronounced camber, in accordance with an embodiment of the present system;
FIG. 3 shows an airfoil of a blade to illustrate an exemplary pronounced camber of the airfoil, in accordance with an embodiment of the present system;
FIG. 4 shows an airfoil including a pronounced camber to illustrate an effect on separation of a wind flow due to the pronounced camber, in accordance with an embodiment of the present system; and
FIG. 5 is a flow chart representing steps involved in an exemplary method for assembling a blade having a pronounced camber, in accordance with an embodiment of the present techniques.

As discussed in detail below, various embodiments of the present system and techniques relate to a blade that has a pronounced camber running between a proximal end to a distal end of the blade. More particularly, embodiments of the present system and techniques relate to an airfoil of the blade that has a pronounced camber on a suction side and in proximity to a trailing edge of the airfoil. As used herein, the term "airfoil" may be used to refer to a design or shape that is defined by a cross-section of a blade.

Referring now to FIG. 2, a diagrammatic illustration of an exemplary wind turbine system 200, in accordance with embodiments of the system, is depicted. In the presently contemplated configuration, the wind turbine system 200 includes a wind turbine 201. The wind turbine 201 may be a horizontal-axis wind turbine, a vertical-axis wind turbine or a down-wind turbine. As used herein, the term "wind turbine" may be used to refer to a rotating machine that converts kinetic energy of wind to mechanical energy. The mechanical energy may then be converted to electrical energy. The wind turbine 201 is acted upon by wind flow 202. The wind turbine 201 includes a plurality of blades 204, 206, 208, and a tower 210. In one embodiment, each of the blades 204, 206, 208 includes a pronounced camber. As used herein, the term "pronounced camber" may be used to refer to a convex bulge on a mean camber line of a cross section of a blade, wherein the convex bulge on the mean camber line results in a convex bulge on the surface of the suction side of the blade. As used herein, the term "mean camber line" is used to refer to an imaginary line that defines the shape of a cross-section of a blade.

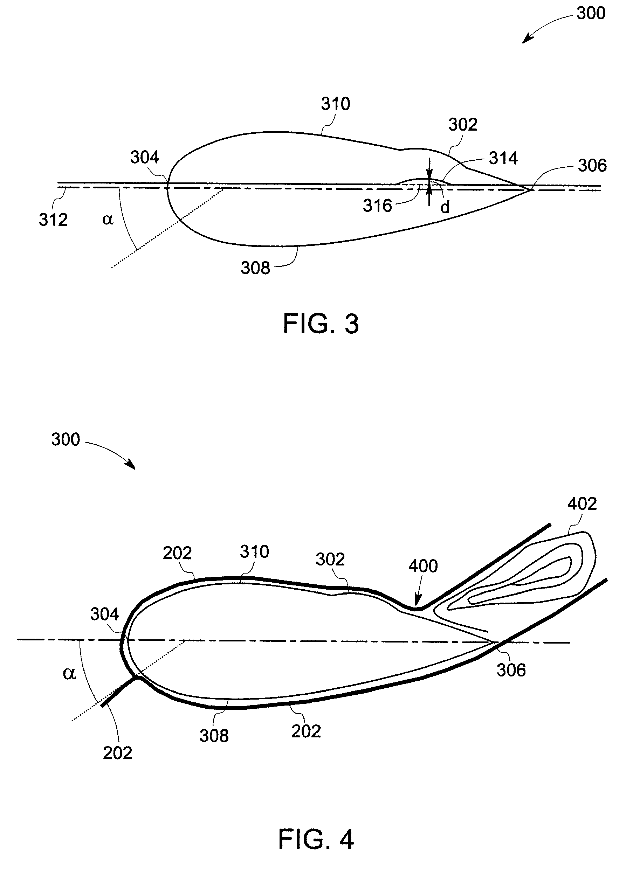

As shown in FIG. 2, each of the blades 204, 206, 208 has a proximal end and a distal end. For example, the blade 204 has a proximal end 212 and a distal end 214, and the blade 206 has a proximal end 216 and a distal end 218. Similarly, the blade 208 has a proximal end 220 and a distal end 222. In one embodiment, a pronounced camber of each of the blades 204, 206, 208 runs from the corresponding proximal end 212, 216, 220 to the corresponding distal end 214, 218, 222, respectively. For example, in the presently contemplated configuration, a pronounced camber runs from the respective proximal end 212, 216, 220 to the respective distal end 214, 218, 222. As shown in FIG. 2, a cross-section 300 of the blade 204 includes a pronounced camber 302. The pronounced camber 302 delays the separation of the wind flow 202, and thus, results in an increased energy production. For ease of understanding, the pronounced camber 302 will be explained in greater detail with reference to FIG. 3. Furthermore, the delay in the separation of the wind flow 202 resulting in the increased energy production will be explained in greater detail with reference to FIG. 4.

FIG. 3 shows the cross-section 300 of the blade 204 to illustrate the exemplary pronounced camber 302, in accordance with an embodiment of the present techniques. Hereinafter, the terms "cross-section" and "airfoil" will be used interchangeably. As shown in FIG. 3, the airfoil 300 includes the pronounced camber 302, a leading edge 304, a trailing edge 306, a pressure side 308, a suction side 310, a chord 312 and a mean camber line 314. As used herein, the term "mean camber line" is used to refer to an imaginary line that defines the shape of an airfoil. More particularly, the term "mean camber line" may be used to refer to a locus of points midway between the upper and lower surfaces of an airfoil. It may be noted that when the airfoil 300 does not include the pronounced camber 302, the shape of the airfoil 300 may be defined by a mean camber line 316. However, when the airfoil 300 includes the pronounced camber 302, the shape of the airfoil 300 is defined by the mean camber line 314. Therefore, the inclusion of the pronounced camber 302 in the airfoil 300 deviates the position of the mean camber line 316. The deviation in the position of the mean camber line 316 results in another mean camber line 314.

As shown in FIG. 3, the pronounced camber 302 is located on the suction side 310 and in proximity to the trailing edge 306. In one embodiment, the pronounced camber 302 is located at a distance varying from about 60% to about 80% of a length of the chord 312 from the leading edge 304. In another embodiment, the pronounced camber 302 is located at a distance varying from about 20% to about 40% of the length of the chord 312 from the trailing edge 306. Additionally, an amplitude *d* of the pronounced camber 302 may vary between about 0.7% to about 1.4% of the length of the chord 312. As used herein, the term "amplitude" may be used to refer to a distance between a mean camber line of an airfoil that does not include a pronounced camber and another mean camber line that is formed after inclusion of the pronounced camber in the airfoil. For example, in the presently contemplated configuration, the amplitude *d* of the pronounced camber 302 is a distance between the mean camber line 316 and the mean camber line 314 of the airfoil 300. As previously noted, the pronounced camber 302 increases annual energy production of the wind turbine 202 by delaying the separation of the wind flow 202 (see FIG. 2) acting on the airfoil 300. The increase in annual energy production due to a pronounced camber will be explained in greater detail with reference to FIG. 4.

Referring now to FIG. 4, effects of the pronounced camber 302 on separation of the wind flow 202 acting on the airfoil 300 of FIG. 3, in accordance with one embodiment of the present techniques, is illustrated. As shown in FIG. 4, the wind flow 202 acts on the airfoil 300. As shown in the presently contemplated configuration, the wind flow 202 separates from the suction side 310 of the airfoil 300 at a separation point 400. Thus, the separation of the wind flow 202 is delayed due to the presence of the pronounced camber 302. Additionally, the delayed separation of the wind flow 202 results in the formation of a smaller separation area 402. Consequently, the drag force on the airfoil 300 may be less, and the performance of the wind turbine 100 having the blade 204 that includes the airfoil 300 may be high.

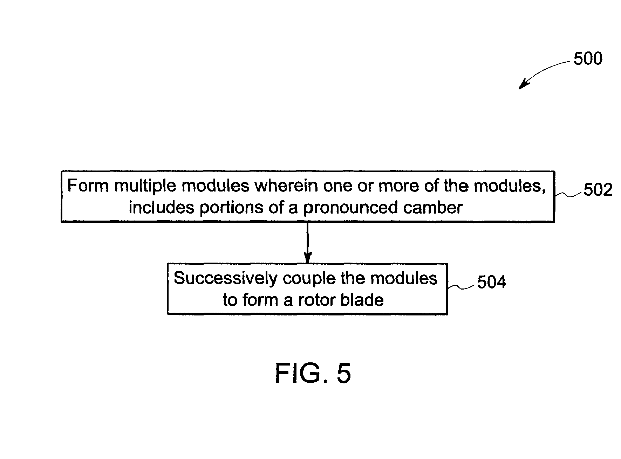

FIG. 5 is a flow chart 500 representing steps involved in an exemplary method for assembling the rotor blade 204 of FIG. 2 having the pronounced camber, in accordance with an embodiment of the present method. As shown in FIG. 5, at step 502, multiple modules of the rotor blade 204 are formed. The multiple modules are formed such that one or more of the modules include portions of the pronounced camber. For example, one of the modules may include the pronounced camber 302 (see FIG. 3). Subsequently, at step 504 the modules are successively coupled to each other to form the rotor blade 204. The modules are successively coupled to each other such that the pronounced camber is located in proximity to a trailing edge and on a suction side of the blade 204. Furthermore, the pronounced camber may have an amplitude that varies between about 0.7% to about 1.4% of a chord's length of a respective cross-section of the blade 204. In one embodiment, the pronounced camber may be located at a distance varying from about 60% to about 80% of the chord's length from a leading edge of the cross-section. In another embodiment, the pronounced camber may be located in proximity to a trailing edge of the blade. The proximity to the trailing edge is a distance varying from about 20% to about 40% of the chord's length from a trailing edge of the cross-section.

Various of the embodiments of the present system and techniques may reduce the region of separated flow in a wind turbine. Due to the presence of pronounced cambers in blades of the wind turbine, the separation of wind flow from the blades is delayed. The delay in the separation of the wind flow results in a smaller separation area and a larger stall margin of the wind turbine. Due to the larger stall margin, the wind turbine would be able to extract more energy from wind, which leads to an increase in annual energy production by the wind. The larger stall margin also helps in smooth and more robust operation of the wind turbine.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A blade (204), comprising:
a proximal end (212) and a distal end (214), and a pronounced camber (302) running between the proximal end to the distal end,
wherein the pronounced camber (302) is located in proximity to a trailing edge (306) and on a suction side (310) of the blade, and an amplitude of the pronounced camber (302) at a location varies between about 0.7% to about 1.4% of a chord's length of a cross-section of the blade (204) at said location.

2. The blade (204) of claim 1, wherein the pronounced camber (302) is located at a distance varying from about 60% to about 80% of the chord's length from a leading edge of the cross-section.

3. The blade (204) of any preceding claim, wherein the proximity to the trailing edge (306) is a distance varying from about 20% to about 40% of the chord's length from a trailing edge of the cross-section.

4. The blade (204) of any preceding claim, wherein the amplitude at the location is a distance between a mean camber line of a cross-section of the blade (204) that does not comprise the pronounced camber and another mean camber line of respective cross-section that is formed when the respective cross-section comprises the pronounced camber (302).

5. A system, comprising:
a plurality of blades (204), wherein each of the plurality of blades (204) comprises a plurality of airfoils, each of the plurality of airfoils comprising a pronounced camber (302),
wherein the pronounced camber (302) is located on a suction side and in proximity to a trailing edge (306) of each of the plurality of airfoils, and the pronounced camber comprises an amplitude varying from about 0.7% to about 1.4% of a length of a chord of each of the plurality of airfoils.

6. The system of claim 5, wherein the pronounced camber (302) is located at a distance varying from about 60% to about 80% of the length of the chord from a leading edge of each of the plurality of airfoils.

7. The system of claim 5 or claim 6, wherein the proximity to the trailing edge (306) is a distance varying from about 20% to about 40% of the length of the chord from the trailing edge.

8. The system of any of claims 5 to 7, wherein the system is a horizontal axis wind turbine, a vertical-axis wind turbine or a down-wind turbine.

9. The system of any of claims 5 to 8, wherein the amplitude is a distance between a mean camber line of the airfoil that does not include the pronounced camber (302) and another mean camber line after inclusion of the pronounced camber in the airfoil.

10. The system of any of claims 5 to 9, wherein the pronounced camber (302) increases an annual energy production of the system within a range of about 1% to about 2%.

11. A wind turbine (200), comprising:
a plurality of blades (204), wherein each of the plurality of blades comprises a plurality of airfoils, each of the plurality of airfoils comprising a pronounced camber (302),
wherein the pronounced camber (302) is located on a suction side and in proximity to a trailing edge of each of the plurality of airfoils, and the pronounced camber comprises an amplitude varying from about 0.7% to about 1.4% of a length of a chord of each of the plurality of airfoils.

12. The wind turbine (200) of claim 11, wherein the wind turbine is a horizontal-axis wind turbine, a vertical-axis wind turbine or a down-wind turbine.

13. A horizontal-axis wind turbine (200), comprising:
a plurality of blades (204), wherein each of the plurality of blades (204) comprises a plurality of airfoils, each of the plurality of airfoils comprising a portion of a pronounced camber (302),
wherein the pronounced camber (302) is located on a suction side and in proximity to a trailing edge of each of the plurality of airfoils, and the pronounced camber comprises an amplitude varying from about 0.7% to about 1.4% of a length of a chord of each of the plurality of airfoils.

14. A method of assembling a rotor blade (204), comprising:
forming multiple modules of the rotor blade wherein one or more of the modules, or portions thereof, comprise a pronounced camber (302); and
successively coupling the modules to form the rotor blade (204),
wherein the pronounced camber (302) is located in proximity to a trailing edge and on a suction side of the rotor blade, and an amplitude of the pronounced camber at a location varies between about 0.7% to about 1.4% of a chord's length of a cross-section of the blade at said location.

15. The method of claim 14, wherein the pronounced camber (302) is located on a suction side and in proximity to a trailing edge of the rotor blade (204).
